Europäisches Patentamt

European Patent Office

Office européen des brevets

(19)

(11) Veröffentlichungsnummer: **0 279 911**
**B1**

(12) **EUROPÄISCHE PATENTSCHRIFT**

(45) Veröffentlichungstag der Patentschrift:
02.05.90

(51) Int. Cl.⁴: **F16C 25/06**

(21) Anmeldenummer: 87116275.6

(22) Anmeldetag: 05.11.87

(54) Vorrichtung zum spielfreien oder vorgespannten Einstellen von Bauteilen, insbesondere von Lageranordnungen.

(30) Priorität: 12.12.86 DE 3642463

(43) Veröffentlichungstag der Anmeldung:
31.08.88 Patentblatt 88/35

(45) Bekanntmachung des Hinweises auf die Patenterteilung:
02.05.90 Patentblatt 90/18

(84) Benannte Vertragsstaaten:
DE FR GB IT SE

(56) Entgegenhaltungen:
CH-A- 148 221
DE-A- 1 817 289
DE-A- 2 532 370
DE-A- 2 743 489
DE-B- 1 069 954
US-A- 2 424 013

(73) Patentinhaber: **FORD-WERKE AKTIENGESELLSCHAFT, Werk Köln-Niehl Henry-Ford-Strasse Postfach 60 40 02, D-5000 Köln 60(DE)**
(84) Benannte Vertragsstaaten: **DE IT SE**

(73) Patentinhaber: **FORD MOTOR COMPANY LIMITED, Eagle Way, Brentwood Essex CM13 3BW(GB)**
(84) Benannte Vertragsstaaten: **GB**

(73) Patentinhaber: **FORD FRANCE SOCIETE ANONYME, 344 Avenue Napoléon Bonaparte B.P. 307, F-92506 Rueil Malmaison Cedex(FR)**
(84) Benannte Vertragsstaaten: **FR**

(72) Erfinder: **Fuss, Josef, Herderstrasse 9, D-5013 Elsdorf(DE)**

(74) Vertreter: **Ritzkowsky, Harald, Dipl.-Ing., Ford-Werke Aktiengesellschaft Patentabteilung NH/DRP Henry-Ford-Strasse, D-5000 Köln 60(DE)**

## Beschreibung

Die Erfindung bezieht sich auf eine Vorrichtung zum spielfreien oder vorgespannten Einstellen von Bauteilen, insbesondere von Lageranordnungen, der im Oberbegriff des Patentanspruches erläuterten Art.

Aus der DE-A 2 532 370 ist ein Verfahren zum genauen Einstellen von Kegelrollenlagern bekannt, bei dem anstelle der allgemein üblichen Paßringe, die nach dem Messen der sich jeweils ergebenden summierten Axialtoleranzen eingebaut werden, zur Vermeidung des Meß- und Selektionsaufwandes ein Paar von Tellerfedern angeordnet wird, die :urch Abstützen am Lagerdeckel die Kegelrollenlagerung spielfrei oder vorgespannt belasten, worauf danach der Zwischenraum zwischen den beiden Tellerfedern durch Einspritzen eines aushärtenden Kunststoffes ausgefüllt wird, damit diese Tellerfedern bei hohen Aixalbelastungen im Betrieb nicht zu unerwünschten Ausweichbewegungen der Lageranordnung führen.

Obwohl nach diesem Verfahren der Meß- und Selektionsaufwand für einzubauende Paßringe vermieden wird, hat sich das Verfahren im Hinblick auf die Schwierigkeiten beim Einspritzen des aushärtenden Kunststoffes nicht in der Großserie durchgesetzt. Darüber hinaus besteht die Schwierigkeit, daß bei zu engem Spaltmaß eine zu hohe Vorspannkraft auf die Lageranordnung einwirkt.

Aus der DE-A 1 817 289 ist eine Vorrichtung zum Einstellen von Spiel an Topfstößeln von Brennkraftmaschinen bekannt, die aus einem Paar von Einstellringen besteht, die mit zueinander komplementären Steigungsflächen aufeinanderliegen und durch Relativdrehung zueinander ihr Axialmaß verändern. Die Steigungsflächen sind hierbei mit einer Kerbverzahnung oder einem Sägezahnprofil versehen um eine selbsttätige Verstellung entgegen den einwirkenden Kräften zu unterbinden.

Aus der DE-A 2 743 489 ist eine weitere Vorrichtung zum Einstellen von Spiel an Stößeln von Brennkraftmaschinen bekannt, wobei miteinander zusammenwirkende Bauteile mit entsprechenden komplementären Steigungsflächen versehen sind und aufeinanderliegen und durch Relativdrehung zueinander ihr Axialmaß verändern. Die Steigungsflächen sind hier wieder mit Buckelwarzen 5 bzw. örtlichen Vertiefungen 6 versehen um eine unbeabsichtigte Verdrehung der Vorrichtung zum Einstellen zu verhindern.

Aus der DE-B 1 069 954 ist eine Vorrichtung zum spielfreien oder vorgespannten Einstellen von Bauteilen, insbesondere von Lageranordnungen mit einem Paar von Einstellringen bekannt, die mit zueinander komplementären Steigungsflächen aufeinanderliegen und durch Relativdrehung zueinander ihr Axialmaß verändern.

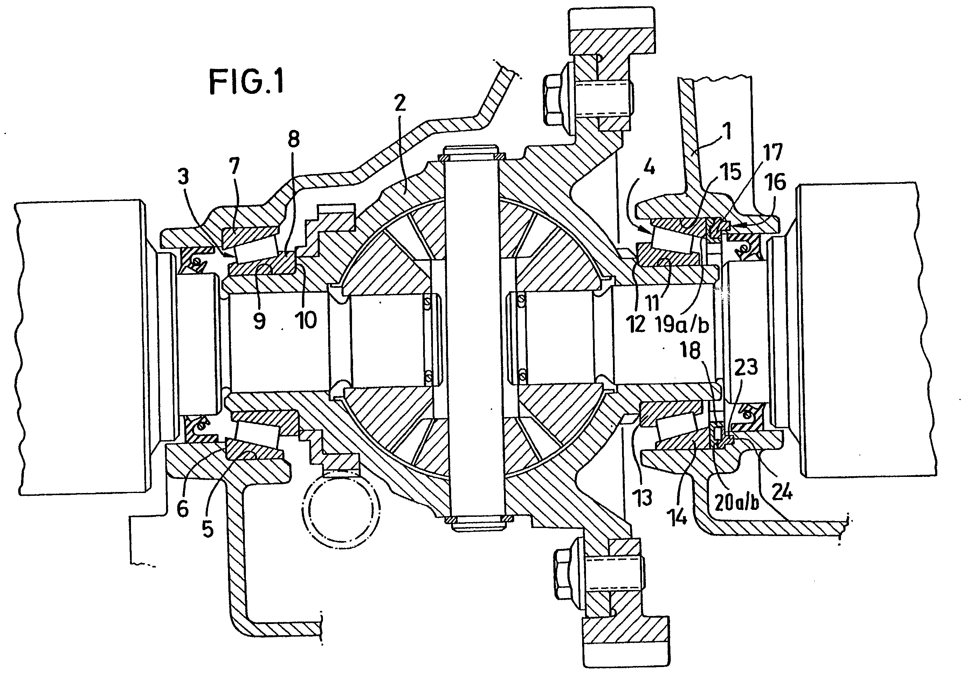

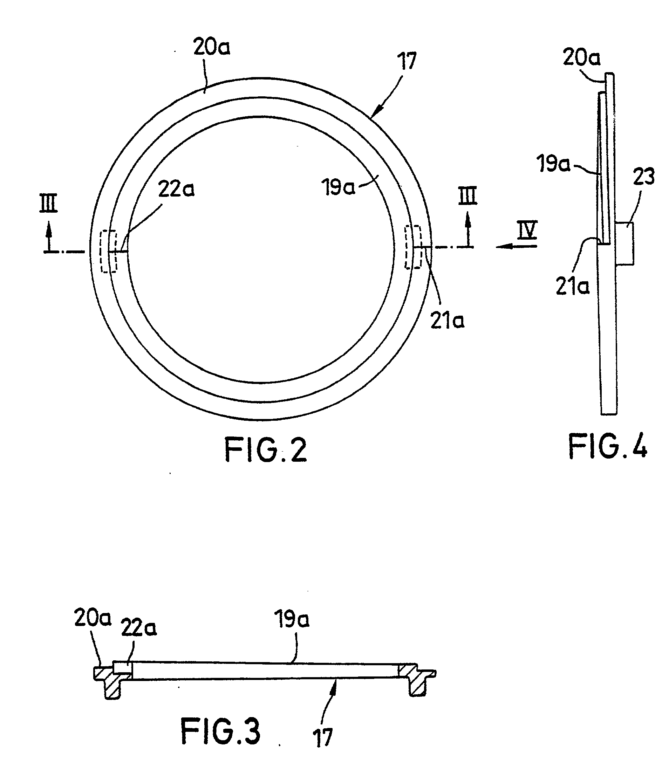

Bei dieser Vorrichtung wird ausdrücklich darauf hingewiesen, daß an jeder Ringscheibe am Außenumfang bzw. am Innenumfang der miteinander zusammenwirkenden Einstellringe Zähne bzw. Lücken vorzusehen sind, die durch Einbiegen eines Zahnes in eine entsprechende Lücke ein nachträgliches Verstellen der Einstellringe verhindern. Ferner zeigen die Figuren 1 und 2 eine Ringscheibe mti zwei oder mehr Schraubenflächen.

Die Anmelderin geht davon aus, daß dem Fachmann eine Übertragung der Vorrichtungen zum Einstellen aus den beiden zuvor genannten Patentanmeldungen auf eine Kegelrollenlageranordnung nach der erstgenannten Patentanmeldung ohne erfinderisches Zutun möglich ist. Dementsprechend geht sie mit ihrer Erfindung von einem so kombinierten Stand der Technik aus.

Eine solche Vorrichtung zum spielfreien oder vorgespannten Einstellen von Bauteilen, insbesondere von Lageranordnungen der im Obergriff des Patentanspruches 1 erläuterten Art weist den Nachteil auf, daß, werden die Steigungsflächen mit einem größeren Steigungswinkel ausgeführt, der mit geringer Relativdrehung eine erhebliche Veränderung des Axialmaßes ermöglicht, solche im Stand der Technik beschriebene Sicherungseinrichtungen gegen ein selbsttätiges Drehen vorgesehen werden müssen. Mit solchen Sicherungseinrichtungen ist jedoch eine erwünschte stufenlose Einstellung nicht mehr möglich. Darüber hinaus erhöhen diese Sicherungseinrichtungen den Bauaufwand.

Werden die zusammenwirkenden Steigungsflächen mit einem geringen, eine Selbsthemmung ermöglichenden Steigungswinkel ausgeführt, so sind verhältnismäßig große Relativdrehungen erforderlich um eine erwünschte Veränderung des Axialmaßes entsprechend den auftretenden Toleranzsummierungen zu erreichen. Bei einer solchen großen Relativverdrehung der beiden Einstellringe zueinander tritt jedoch der Nachteil auf, daß diese über weite Abschnitte ihrer Steigungsflächen nicht mehr aneinander abgestützt sind, so daß die axiale Abstützung eines Bauteiles oder z.B. des Außenringes einer Kegelrollenlagerung nicht mehr gleichmäßig an dessen Umfang sichergestellt wird, was bei hohen Axiallasten, wie insbesondere bei Kegelrollenlagerungen nicht toleriert werden kann, da ansonsten mit einem frühzeitigen Ausfall des Lagers zu rechnen ist.

Die Aufgabe der Erfindung ist es daher, eine Vorrichtung zum spielfreien oder vorgespannten Einstellen von Bauteilen, insbesondere von Lageranordnungen der im Oberbegriff des Patentanspruches 1 erläuterten Art derart zu verbessern, daß die zueinander komplementären, aufeinanderliegenden Steigungsflächen mit einem Steigungswinkel ausgeführt werden können, der eine Selbsthemmung der Einrichtung sicherstellt und daß große Relativdrehungen zueinander möglich sind um die erwünschte große Veränderung des Axialmaßes sicherzustellen, ohne daß hierdurch die oben erwähnten Beeinträchtigungen der Abstützung eines axial hochbelasteten Bauteiles auftreten.

Gemäß der Erfindung wird diese Aufgabe gelöst, indem eine Vorrichtung zum spielfreien oder vorgespannten Einstellen von Bauteilen, insbesondere von Lageranordnungen der im Oberbegriff des Patentanspruches 1 erläuterten Art, die im Kennzeichenteil des Anspruches 1 aufgezeigten Maßnahmen aufweist.

In den Ansprüchen 2 und 3 sind zweckmäßige Ausgestaltungen der Erfindung erläutert.

Dadurch, daß an dem Paar von Einstellringen in Draufsicht auf ihre Steigungsflächen zwei oder mehrere konzentrisch zueinander liegende Steigungsflächen mit einem Steigungswinkel im Bereich der Selbsthemmung ausgebildet sind, die bezüglich ihres Steigungsanfangs und -endes winkelmäßig zueinander verdreht angeordnet sind, wird auch bei Auswahl eines niedrigen, Selbsthemmung sichernden Steigungswinkels und größerer Relativverdrehung der Einstellringe eine gleichmäßige Abstützung am Umfang des einzustellenden Bauteiles sichergestellt.

Für die Maßnahme, die Schraubenflächen einerseits so zu gestalten, daß sie selbsthemmend wirken, so daß auf eine Sicherungseinrichtung gegen ungewolltes Lösen der Einstellringe unter axialem Druck verzichtet werden kann, und andererseits die Steigungsübergänge dieser relativ langen Schraubenflächen so anzuordnen, daß eine gleichmäßige Abstützung am Umfang des einzustellenden Bauteils gewährleistet ist, gibt auch die DE-B 1 069 954 keine Anregung.

Vorzugsweise ist an dem Paar von Einstellringen in Draufsicht auf ihre Steigungsflächen eine innere Steigungsfläche mit einem Steigungswinkel im Bereich der Selbsthemmung und konzentrisch hierzu eine äußere Steigungsfläche mit einem Steigungswinkel im Bereich der Selbsthemmung ausgebildet, deren Steigungsanfänge und -enden um 180° zueinander verdreht angeordnet sind.

Vorzugsweise wird der gehäuseseitige Einstellring mit Vorsprüngen zur Verdrehsicherung und der lagerseitige Einstellring mit Nuten für ein Einstellwerkzeug versehen.

Die Erfindung wird anhand eines in den Zeichnungen gezeigten Ausführungsbeispieles näher erläutert. Es zeigt:

Fig. 1 eine typische Anordnung einer Kegelrollenlagerung mit der erfindungsgemäßen Vorrichtung zum Einstellen;

Fig. 2 eine Ansicht des gehäuseseitigen Einstellringes auf die Steigungsflächen;

Fig. 3 einen Schnitt entlang der linie III - III in Fig. 2;

Fig. 4 eine Ansicht in Richtung des Pfeiles IV in Fig. 2;

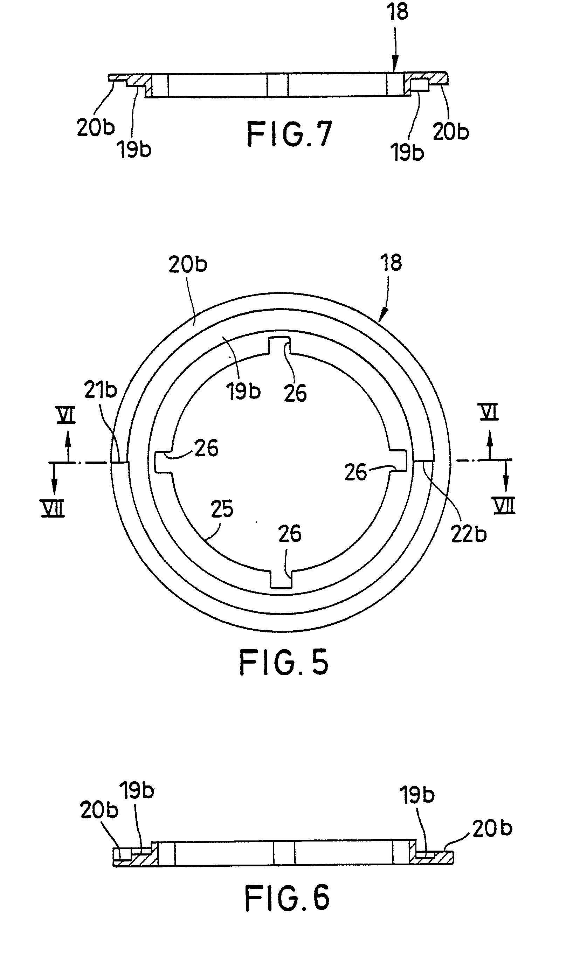

Fig. 5 eine Ansicht des lagerseitigen Einstellringes auf die Steigungsflächen;

Fig. 6 einen Schnitt entlang der Linie VI - IV in Fig. 5 und

Fig. 7 einen Schnitt entlang der Linie VII - VII in Fig. 5.

In der in Figur 1 gezeigten typischen Anordnung einer Kegelrollenlagerung bei einem Ausgleichsgetriebe eines Kraftfahrzeuges, werden nur diejenigen Teile mit Bezugszeichen versehen und in der Beschreibung erläutert, die für das Verständnis der Erfindung erforderlich sind.

In einem Getriebegehäuse 1 ist ein Bauteil 2 über Kegelrollenlager 3 und 4 gelagert. Das Gehäuse 1 ist hierbei an einer Seite mit einer entsprechenden Aufnahmebohrung 5 mit einer anschließenden Schulter 6 zur Aufnahme des Außenringes 7 des Kegelrollenlagers 3 versehen. Der Innenring 8 des Kegelrollenlagers 3 ist auf einem Ansatz 9 mit einer anschließenden Schulter 10 am Bauteil 2 aufgenommen.

Das andere Ende des Bauteiles 2 weist einen weiteren Ansatz 11 mit einer anschließenden Schulter 2 auf an dem der Innenring 13 des Kegelrollenlagers 4 aufgenommen wird. Der Außenring 14 des Kegelrollenlagers 4 wird in einer Aufnahmebohrung 15 des Getriebegehäuses 1 aufgenommen.

Durch die sich am Bauteil 2, am Getriebegehäuse 1 und an den Kegelrollenlagern ergebenden axialen Toleranzsummierungen muß am Außenring 14 des einen Kegelrollenlagers 4 eine Vorrichtung 16 zum Einstellen der Spielfreiheit oder der Vorspannung vorgesehen werden.

Diese Vorrichtung 16 zum Einstellen besteht aus einem Paar von Einstellringen 17 und 18, die in Draufsicht auf ihre Steigungsflächen zwei konzentrisch zueinander liegende Steigungsflächen mit einem Steigungswinkel im Bereich der Selbsthemmung aufweisen, einer inneren Steigungsfläche 19a bzw. 19b mit einem Steigungswinkel im Bereich der Selbsthemmung und einer äußeren Steigungsfläche 20a bzw. 20b mit einem Steigungswinkel im Bereich der Selbsthemmung, deren Steigungsanfänge und -enden 21a und 21b und 22a und 22b um 180° zueinander verdreht angeordnet sind.

Der gehäuseseitige Einstellring ist hierbei an seiner den Steigungsflächen 19a und 20a abliegenden Seite mit zwei Vorsprüngen 23 versehen, die in entsprechenden Ausfräsungen 24 im Gehäuse zur Sicherung gegen Verdrehung aufgenommen werden.

Der lagerseitige Einstellring 18 ist mit zwei zum Einstellring 17 komplementären Steigungsflächen, einer inneren Steigunsgfläche 19b und einer äußeren Steigungsfläche 20b versehen, deren Steigungsanfänge und -enden 21b und 22b um 180° zueinander verdreht angeordnet sind. Der Einstellring 18 ist an seinem inneren Umfang 25 mit radialen Nuten 26 versehen, über die ein Einstellwerkzeug auf den Einstellring 18 einwirken kann.

Die sich aus den beiden Einstellring, den gehäuseseitigen Einstellringen 17 und den lagerseitigen Einstellringen 18 ergebende Vorrichtung 16 zum Einstellen der Spielfreiheit oder Vorspannung zwischen Bauteilen, insbesondere von Kegelrollenlagerungen weist den Vorteil auf, daß eine optimale Lagereinstellung von außen möglich ist, da die Steigungswinkel der Steigungsflächen im Bereich der Selbsthemmung gewählt werden können und somit eine stufenlose Einstellung des Axialmaßes erfolgen kann. Dabei ist durch die Anordnung der um 180° zueinander verdreht angeordneten inneren und äußeren Steigungsflächen 19a/b und 20 a/b sichergestellt, daß auch bei einer durch großes auszugleichendes Spiel erforderlich werdenden großen Relativdrehung der beiden Einstellringe zueinander eine sichere Abstützung des verspannten Bauteiles erzielt wird.

Die Wahl der Anzahl von konzentrisch zueinanderliegenden Paaren von Steigungsflächen mit einem Steigungswinkel im Bereich der Selbsthemmung und deren winkelwärtige Anordnung muß daher entsprechend den zu erwartenden Toleranzspielräumen und der gewünschten Güte der Abstützung des verspannten Bauteiles ausgewählt werden. Bei dem in der Figur 1 gezeigten Anwendungsfall kann man davon ausgehen, daß eine Anordnung von zwei konzentrischen Paaren von Steigungsflächen mit einem Steigungswinkel im Bereich der Selbsthemmung ausreicht, sofern nicht zu große Axialtoleranzen oder zu hohe Lagerbelastungen zu erwarten sind. Selbstverständlich hängt die Abstützung des verspannten Bauteiles auch davon ab, wieviel Platz für die Anordnung einer Vorrichtung 16 zum Einstellen innerhalb des vorgesehenen Bauraumes zur Verfügung steht.

## Patentansprüche

1. Vorrichtung zum spielfreien oder vorgespannten Einstellen von Bauteilen, insbesondere von Lageranordnungen (3 und 4) mit einem Paar von Einstellringen (17 und 18), die mit zueinander komplementären Steigungsflächen (19a/b) aufeinanderliegen und durch Relativdrehung zueinander ihr Axialmaß verändern, dadurch gekennzeichnet, daß an dem Paar von Einstellringen (17 und 18) in Draufsicht auf ihre Steigungsfläche gesehen, zwei oder mehrere konzentrisch zueinander liegende Paare von Steigungsflächen (19a/b und 20a/b) mit einem Steigungswinkel im Bereich der Selbsthemmung ausgebildet sind, die bezüglich ihres Steigungsanfanges (21a/b und 22a/b) winkelmäßig zueinander verdreht angeordnet sind, so daß eine gleichmäßige Abstützung am Umfange des einzustellenden Bauteils sichergestellt ist.

2. Vorrichtung nach Anspruch 1 , **dadurch gekennzeichnet**, daß an dem Paar von Einstellringen (17 und 18) in Draufsicht auf ihre Steigungsfläche gesehen ein Paar von inneren Steigungsflächen (19 a/b) mit einem Steigungswinkel im Bereich der Selbsthemmung und konzentrisch hierzu ein Paar von äußeren Steigungsflächen (20 a/b) mit einem Steigungswinkel im Bereich der Selbsthemmung ausgebildet sind, deren Steigungsanfänge und -enden (21 a/b und 22 a/b) um 180° zueinander verdreht angeordnet sind.

3. Vorrichtung nach den Ansprüchen 1 und 2, **dadurch gekennzeichnet**, daß der gehäuseseitige Einstellring (17) Vorsprünge (23) zur Aufnahme in Ausfräsungen (24) im Gehäuse (1) und der lagerseitige Einstellring (18) an seinem Innenumfang (25) radiale Nuten (26) für den Angriff eines Einstellwerkzeuges aufweist.

## Claims

1. An apparatus for the play-free or prestressed setting of components, in particular of bearing arrangements (3 and 4), with a pair of setting rings (17 and 18) which bear one upon the other with complementary inclined surfaces (19a/b) and alter their axial dimension by rotation relative to one another, characterized in that two or more pairs of inclined surfaces (19a/b and 20a/b) lying concentrically to one another with an angle of inclination in the range of automatic locking, which are arranged rotationally staggered to one another with respect to the beginning (21a/b) and end (22a/b) of their inclination, so as to ensure a uniform support on the periphery of the component to be set, are formed on the pair of setting rings (17 and 18) as seen in plan view in the direction of their inclined surfaces.

2. An apparatus according to Claim 1, characterized in that a pair of internal inclined surfaces (19a/b) with an angle of inclination in the range of automatic locking and concentric thereto a pair of external inclined surfaces (20a/b) with an angle of inclination in the range of automatic locking, the beginings (21a/b) and ends (22a/b) of inclination of which are arranged rotationally staggered at 180° to one another, are formed on the pair of setting rings (17 and 18) as seen in plan view in the direction towards their inclined surfaces.

3. An apparatus according to Claims 1 and 2, characterized in that the setting ring (17) towards the casing comprises projections (23) to be received in recesses (24) in the casing (1) and the internal periphery (25) of the setting ring (18) towards the bearings comprises radial grooves (26) for engaging with a setting tool.

## Revendications

1. Dispositif permettant de régler, sans jeu ou avec contrainte préalable, de pièces structurelles, notamment des paliers (3, 4), comprenant une paire de bagues de réglage (17, 18) qui s'appuient l'une sur l'autre par des surfaces inclinées (19a, 19b) complémentaires l'une de l'autre et dont on modifie la dimension axiale par une rotation relative de entre elles, caractérisé en ce que, sur la paire de bagues de réglage (17, 18), et en vue de dessus sur leurs surfaces inclinées, il est réalisé deux paires, ou plus, de surfaces inclinées (19a, 19b, 20a, 20b) disposées de manière concentrique entre elles et comportant un angle d'inclinaison se trouvant dans la domaine de l'autoblocage, ces surfaces inclinées étant décalées angulairement entre elles en ce qui concerne le début et la fin (21a, 21b, 22a, 22b) de leur inclinaison, ce qui assure un appui uniforme sur toute la périphérie de la pièce à régler.

2. Dispositif suivant la revendication 1, caractérisé en ce que sur la paire de bagues de réglage (17, 18), et en vue de dessus sur leurs surfaces inclinées, il est prévu une paire de surfaces inclinées intérieures (19a, 19b) offrant un angle d'inclinaison se trouvant dans le domaine de l'autoblocage et, d'une manière concentrique à celles-ci, une paire de surfaces inclinées extérieures (20a, 20b) offrant un angle d'inclinaison se trouvant dans le domaine de l'autoblocage, les débuts et fins d'inclinaison (21a, 21b, 22a, 22b) de ces surfaces inclinées étant décalés en rotation de 180° entre eux.

3. Dispositif suivant l'une quelconque des revendications 1 et 2, caractérisé en ce que la bague de réglage (17) située du côté du boîtier comporte des saillies (23) destinées à se loger dans des fraisures (24) ménagées dans le boîtier (1) et en ce que la bague de réglage (18) située du côté du palier comporte, sur son contour périphérique intérieur (25), des entailles radiales (26) permettant la prise d'un outil de réglage.

FIG.1

FIG.2

FIG.4

FIG.3

FIG.7

18

20b  19b        19b  20b

20b

19b        19b  20b

FIG.5

18

21b

VI
VII

VI
VII

22b

25

26

26

26

26

FIG.6

19b

20b

20b

19b

20b